# EUROPEAN PATENT APPLICATION

(11) **EP 1 224 990 A1**
(43) Date of publication of application: **24.07.2002**
(21) Application number: 02001053.4
(22) Date of filing: 21.01.2002
(51) Int. Cl.: B23B 13/12

(54) **Bar feeder for feeding machine tools**

(30) Priority: 23.01.2001 IT BO010029
(71) Applicant: IEMCA Giuliani Macchine Italia S.p.A., 48018 Faenza (Ravenna) (IT)
(72) Inventor: Drei, Andrea, 48018 Faenza (Ravenna) (IT); Ravaioli, Silvano, 48018 Faenza (Ravenna) (IT)
(74) Representative: Modiano, Guido, Dr.-Ing.

(57) **Abstract**

A bar feeder for feeding a machine tool, particularly for feeding with bars a single-spindle automatic lathe, comprising a horizontal supporting beam (9) for a plurality of free rollers (11), which lie on a horizontal plane and form a substantially V-shaped channel (14) for the longitudinal support of a bar (B), said beam (9) being movable vertically parallel to itself, adjustment means being provided for vertically adjusting said beam (9) in order to align said bar (B) with the axis of said lathe.

## Description

The present invention relates to a bar feeder for feeding machine tools.

It is known that bar feeders used to feed machine tools, such as single- and multiple-spindle automatic lathes, comprise a guiding channel in which the bars are individually inserted and made to advance toward the lathe.

Since the bars must be arranged in the channel so as to be coaxial to the machining axis of the lathe (hereinafter referenced as the lathe axis), it is necessary to often replace the channel according to the diameter and shape of the bars.

This fact entails the availability of a range of channels and complex operations for replacement and setup of the feeder in order to achieve correct support of the bars of different diameters and perfect alignment with the lathe axis.

The aim of the present invention is to provide a feeder that allows to feed bars of any diameter without requiring replacement of the guiding channel every time the diameter of the bar to be machined in the lathe changes.

Within this aim, an object of the present invention is to provide a feeder that is capable of feeding not only cylindrical bars but also bars having a polygonal cross-section.

This aim and this and other objects that will become better apparent hereinafter are achieved with a bar feeder for feeding a machine tool, particularly for feeding with bars a single-spindle automatic lathe, characterized in that it comprises a horizontal supporting beam for a plurality of free rollers, which lie on a horizontal plane and form a substantially V-shaped channel for the longitudinal support of a bar, said beam being movable vertically parallel to itself, means being provided for vertically adjusting said beam in order to align said bar with the axis of said lathe.

Further characteristics and advantages of the present invention will become apparent from the description that follows of a preferred embodiment thereof, illustrated only by way of non-limitative example in the accompanying drawings, wherein:
Figure 1 is a plan view of the feeder;
Figure 2 is a lateral elevation view;
Figures 3 and 4 are two enlarged-scale views showing the adjustment means for vertically adjusting the roller supporting beam in two active positions in a configuration for small-diameter bars;
Figures 5 and 6 are two sectional views, taken along the lines V-V and VI-VI of Figures 3 and 4, respectively;
Figure 7 is a perspective view showing the adjustment means for vertical adjustment of the roller supporting beam;
Figures 8 and 9 are views showing two different types of roller that form the guiding channel; and
Figures 10 and 11 are views, similar to Figures 3 and 4, but in the configuration suitable for large-diameter bars.

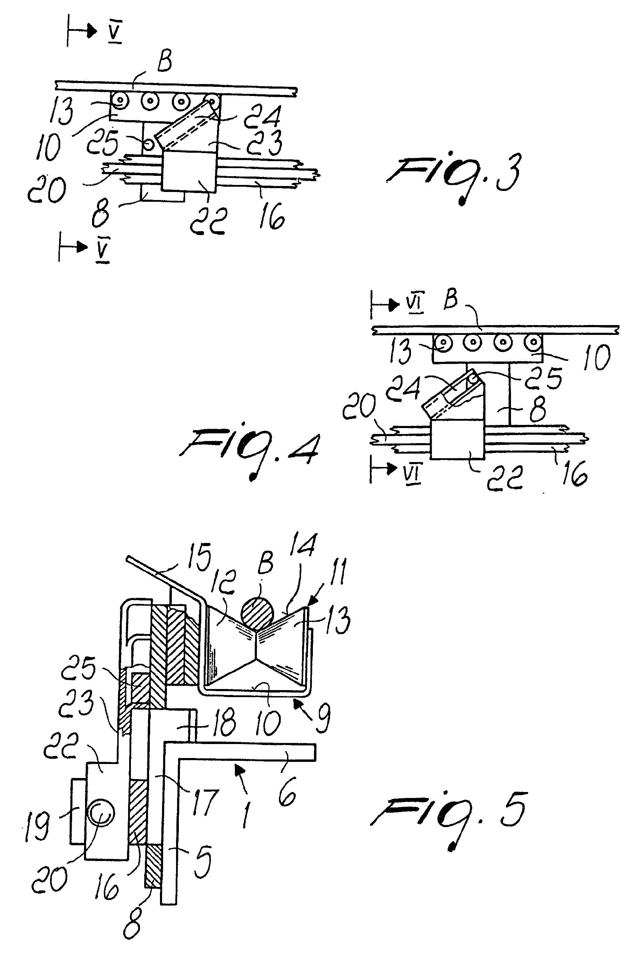

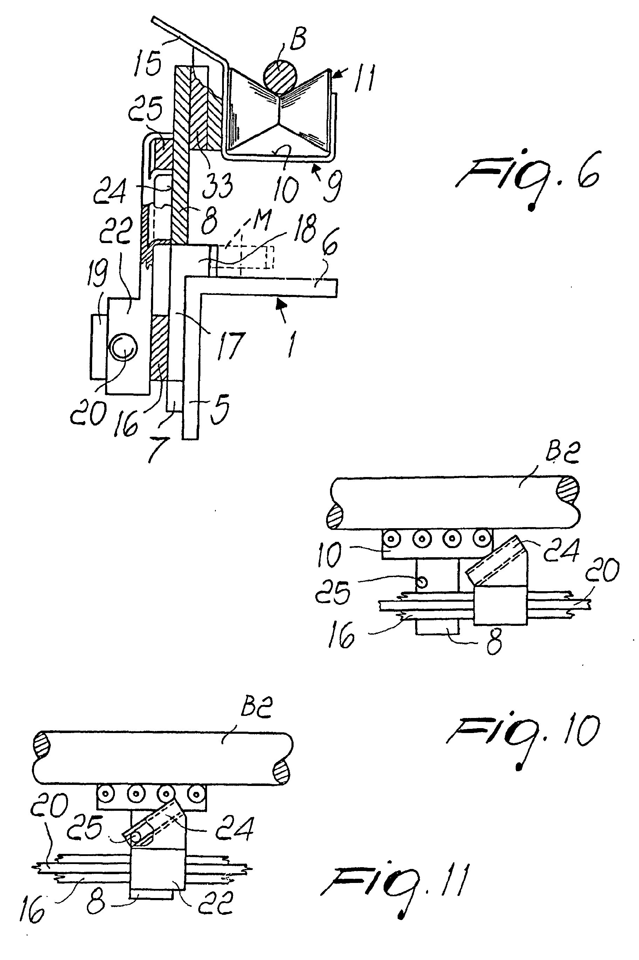

With reference to the figures, the feeder comprises a longitudinal member 1, which connects two mutually opposite shoulders 2 and 3 and is supported by a footing 4. The longitudinal member 1 has an L-shaped cross-section (see Figures 5 and 6), with a vertical wall 5 and a wall 6 that protrudes horizontally from the wall 5.

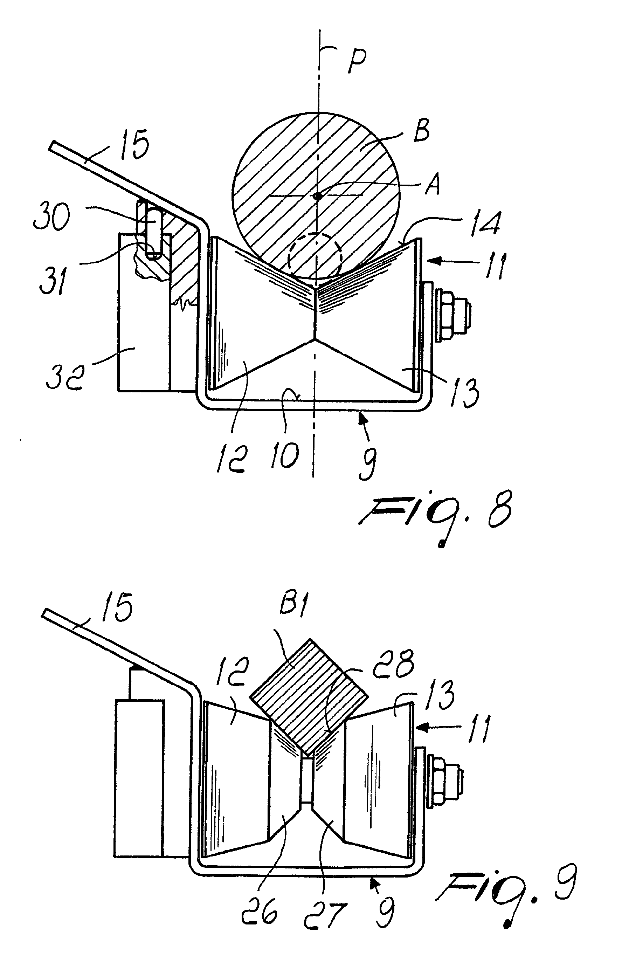

To the side of the vertical wall 5 there are two vertical guides 7, in which two respective flat strips 8 are guided; a beam 9 is fixed to the top of said strips and has a box-like U-shaped cross-section. The beam 9 is parallel to the longitudinal member 1 and lies above it, and comprises a compartment 10, which is open upward and rotatably supports multiple free parallel rollers 11. The rollers 11 are shaped like an hourglass (see Figure 8 in particular), composed of two mutually opposite frustums 12, 13, which are tangent to two planes which form a V-shaped guiding channel 14. The numeral 15 designates a chute, which protrudes obliquely from one edge of the beam 9, and has the function to convey the bar to be machined into the channel 14.

A linkage 16 is arranged in front of the two strips 8 so that it can slide and be guided horizontally; said linkage is parallel to the longitudinal member 1 and is connected, by means of brackets 17, to a rack 18, which can slide in a guide provided on the horizontal wall 6 of the longitudinal member 1.

The rack 18 meshes with the pinion of a reversible motor assembly M which is capable of imparting to said rack, and therefore to the linkage 16, a stroke having a preset length.

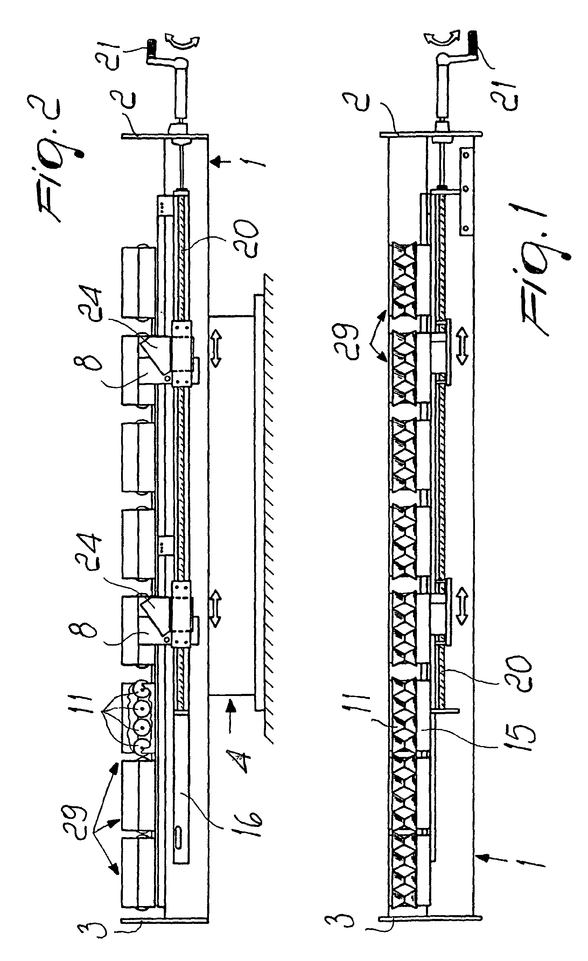

The linkage 16 has, at its opposite ends, supports 19 for a threaded rod 20, which can be actuated by means of a crank 21 (see Figures 1, 2) rotatably supported in the side 2. The rod 20 is rotationally coupled to the crank 21 by means of a telescopic coupling, which allows the rod to follow the movements of the linkage 16 caused by the actuation imparted thereto by the rack 18.

The linkage 16, with respective plates 16a associated therewith by means of spacer pins 16b, forms two guides, in which two respective sliding blocks 22 can slide; said sliding blocks have respective threaded seats, through which the rod 20 is guided with a threaded coupling. Accordingly, the actuation of the crank 21 produces the movement of the sliding blocks 22 with respect to the linkage 16 and therefore with respect to the strips 7.

A respective L-shaped element 23 is fixed to each sliding block 22, and a respective channel-shaped cam 24 is rigidly coupled to the top of said L-shaped element. The cams 24 are constituted by a C-shaped profiled element, which is open toward the strips 8, and the lower end of said cams is open in order to receive a follower roller 25, which protrudes from the respective strip.

As clearly shown by Figures 5 and 6, the bar B to be inserted in the lathe, fed from a magazine by means of the chute 15, is deposited in the guiding channel 14, where the V-shaped cross-section of the channel keeps it perfectly positioned in the vertical plane P (see Figure 8) that passes through the lathe axis A.

Adjustment means are thus provided for vertically adjusting the beam 9, to align bars B with the axis of the lathe .

Vertical alignment of the axis of the bar B with the axis A of the lathe is performed by actuating the rack 18, which moves the linkage 16 with such a stroke as to cause the engagement of the two follower rollers 25 in the cams 24 and therefore, as a consequence of the oblique orientation of said cams, the lifting of the strips 8 to the intended level of alignment with the lathe axis A.

The described feeder therefore achieves the intended aim and object. In particular, as shown in Figure 8, the V-shaped cross-section of the groove of the rollers ensures the arrangement of the bars on the plane P regardless of their diameter.

In the case of bars B2 having a large diameter (see Figures 10 and 11), the adjustment performed with the rod 20 allows to move the sliding blocks 22 away from the follower rollers 25. This allows to cancel out part of the stroke performed by the rollers as a consequence of the actuation of the linkage 16 and therefore ultimately allows to reduce the upward stroke of the bar B2, whose axis, owing to the larger diameter, is already displaced further upward toward the lathe axis.

The described feeder is susceptible of numerous modifications and variations which are to be considered technically equivalent to the ones defined by the appended claims.

For example (see Figure 9), the rollers 11 can have a central groove formed by control frustums 26, 27 that converge toward their rotation axis A with an angle that is larger than the angle of the lateral frustums 12, 13. In this manner, it is possible to delimit guiding grooves 28 for polygonal bars B1. Figure 8 illustrates an example of rollers for guiding bars having a square cross-section, regardless of their size.

In the practical embodiment of the invention, the actuation of the threaded rod 20 can occur with the aid of a motor assembly instead of manually.

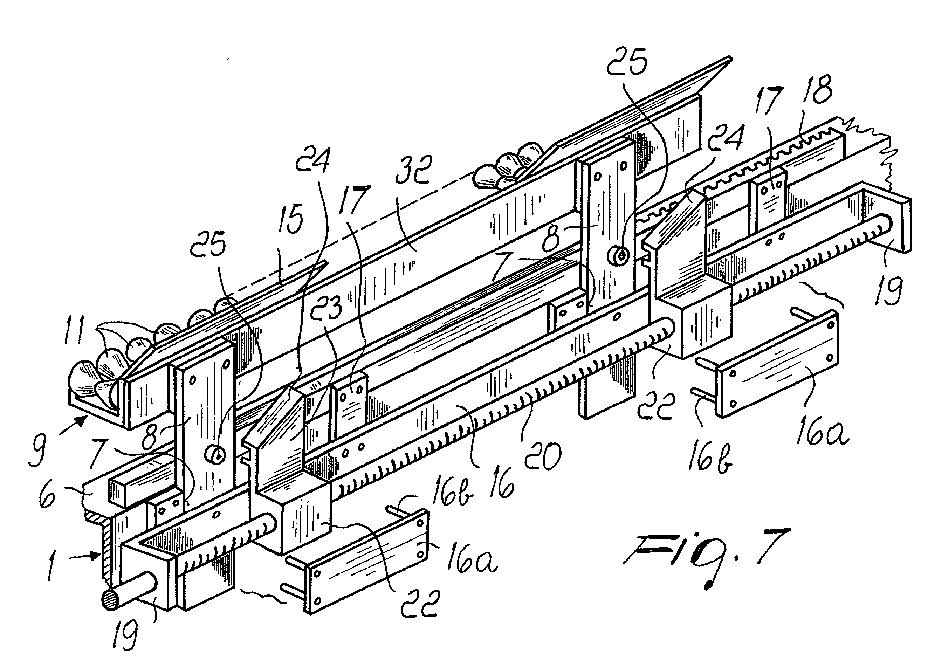

Advantageously, the bar guiding channel 14 is composed of a plurality of modules 29 (see Figures 1, 2 and 7), each of which comprises a beam portion 9 which supports a preset number of rollers 11. The portions are provided with pins 30, which are suitable to be inserted in seats 31 of a longitudinal member 32 that joins the strips 8 at the top.

The disclosures in Italian Patent Application No. BO2001A000029 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bar feeder for feeding a machine tool, particularly for feeding with bars a single-spindle automatic lathe, **characterized in that** it comprises a horizontal supporting beam (9) for a plurality of free rollers (11), which lie on a horizontal plane and form a substantially V-shaped channel (14) for the longitudinal support of a bar (B), said beam (9) being movable vertically parallel to itself, adjustment means (16,18,24,25) being provided for vertically adjusting said beam (9) in order to align said bar (B) with the axis of said lathe.

2. The bar feeder according to claim 1, **characterized in that** it comprises a longitudinal member (1) which is provided with vertical guides (7) for respective flat strips (8), to the top of which the supporting beam (9) for a plurality of free and parallel rollers (11) is fixed, a linkage (16) being supported by said beam (9) so as to be horizontally slideable, said linkage (16) being parallel to said beam (9) and being connected to a rack (18) that can slide in a guide provided on said beam (9) and is actuated by a reversible motor assembly (M), which is capable of imparting to said rack (8), and therefore to the linkage (16), a preset stroke, said linkage (16) supporting a threaded rod (20) which is rotationally coupled to actuation means (21), respective sliding blocks (22) being guided on said linkage (16), said sliding blocks (22) having threaded seats through which said rod (20) is guided with a threaded coupling, a cam (24) being fixed on each sliding block (22) and being operatively associated with a follower roller (25) which is rigidly coupled to a respective strip (8), so that by actuating said rack (18) said linkage (16) is made to perform a stroke which determines the engagement of said follower rollers (25) with said cams (24) and the lifting of the strips (8) to the level at which the bar (B) deposited on the rollers (11) is aligned with the lathe axis.

3. The feeder according to one of claims 1 and 2, **characterized in that** said rollers (11) are constituted by two coaxial frustums (11,12) arranged mutually opposite so as to form said V-shaped channel (14).

4. The feeder according to one of claims 1, 2 and 3, **characterized in that** the rollers (11) have a central groove (28) formed by the central frustums (26,27) that converge toward their rotation axis with an angle that is greater than the angle of the lateral frustums (12,13).

5. The feeder according to one of claims 2, 3 and 4, **characterized in that** said threaded rod (20) is actuated by a reversible motor assembly.

6. The feeder according to one of the preceding claims, **characterized in that** said bar guiding channel (14) is composed of a plurality of modules, each of which comprises a beam portion (9) which supports a preset number of rollers (11), said portions (9) being provided with pins (30) which are adapted to be inserted in seats (31) of a longitudinal member (32) that joins said strips (8).
